(19) Europäisches Patentamt
European Patent Office
Office européen des brevets

(11) **EP 0 635 696 B1**

(12) **EUROPÄISCHE PATENTSCHRIFT**

(45) Veröffentlichungstag und Bekanntmachung des Hinweises auf die Patenterteilung:
**14.05.1997 Patentblatt 1997/20**

(51) Int Cl.⁶: **G01B 7/06**, G01D 5/20

(21) Anmeldenummer: **94110171.9**

(22) Anmeldetag: **30.06.1994**

(54) **Papierdicken-Messvorrichtung**

Paper-thickness measuring device

Appareil de mesure de l'épaisseur du papier

(84) Benannte Vertragsstaaten:
**DE**

(30) Priorität: **15.07.1993 DE 9310528 U**

(43) Veröffentlichungstag der Anmeldung:
**25.01.1995 Patentblatt 1995/04**

(73) Patentinhaber: **Mathias Bäuerle GmbH**
**D-78112 St Georgen (DE)**

(72) Erfinder: **Schlipf, Robert**
**D-78112 St. Georgen (DE)**

(74) Vertreter: **Neymeyer, Franz, Dipl.-Ing. (FH)**
**Haselweg 20**
**78052 Villingen-Schwenningen (DE)**

(56) Entgegenhaltungen:
EP-A- 0 025 976       DE-A- 3 722 702
US-A- 3 516 273       US-A- 3 750 294
US-A- 3 891 918       US-A- 4 741 109

• DATABASE WPI Week 9428, Derwent Publications Ltd., London, GB; AN 94-233066 & SU-A-1 812 563 (TRACTOR CONSTR SCI PRODN ASSOC) 30. April 1993

**Beschreibung**

Die Erfindung betrifft eine Vorrichtung zum elektronischen Messen der Dicke von dünnen Bahnen oder Bögen, insbesondere Folien oder Papierbögen, bestehend aus einer ortsfesten Auflagefläche und einem Tastsensor, der ein relativ zur Auflagefläche bewegliches, ferromagnetisches Tastorgan aufweist, das in Abhängigkeit von seiner Stellung relativ zur Auflagefläche das Signal eines als Sensorspule ausgebildeten induktiven Meßwertgebers beeinflußt. Eine solche Vorrichtung ist z.B. aus dem Dokument EP-A-0 025 976 bekannt.

Es sind Vorrichtungen bekannt, bei welchen z.B. ein Papierbogen zwischen eine Auflagefläche und das Tastorgan eines Signalsensors bringbar ist, so daß das Tastorgan senkrecht zur Auflagefläche aus seiner Ruhelage ausgelenkt wird. Als Signalsensor werden zur Messung einer solchen geringen Auslenkung z.B. Querankergeber verwendet (siehe z.B. das Dokument US-A- 3 750 294). Dieser induktive Sensor weist eine Magnetspule und einen ferromagnetischen Rückschlußkörper, den sogenannten Queranker, auf, der quer zur Spulenachse verlaufend und in Achsrichtung der Spule beweglich geführt angeordnet ist. Das Tastorgan ist mechanisch mit dem Queranker gekoppelt, so daß dessen Auslenkung auf diesen übertragen wird. Durch die Verlagerung des Querankers gegenüber der Magnetspule wird deren Induktivität und damit ihre Impedanz beeinflußt. Diese Beeinflussung ist mittels einer entsprechenden elektronischen Schaltungsanordnung als Sensorsignal meßbar.

Eine weitere Ausführungsform eines Querankergebers ist der Differentialquerankergeber. Dieser weist eine zweite Magnetspule auf, die der ersten orstfest gegenüberliegend und koaxial zu dieser angeordnet ist. Zwischen beiden Spulen ist ein Zwischenraum vorgesehen, in welchem der Queranker in Spulenachsrichtung beweglich geführt ist. Die beiden Magnetspulen sind in einer Meßbrücke zur Signalauswertung zusammengeschaltet.

Diese Formen von induktiven Signalsensoren sind insbesondere zu Messung kleiner Wegänderungen, wie dies z.B. bei der Papierdickenmessung der Fall ist geeignet. Nachteilig ist allerdings ist, daß der Zusammenhang zwischen der Verschiebung des Tastorgans und damit des Querankers und dem Sensorsignal nicht linear ist, d.h. der Signalsensor keine lineare Kennlinie aufweist. Eine solche nicht lineare Kennlinie des Sensors tritt insbesondere bei Sensoren kleiner Baugröße auf, da durch deren äußerst kurze Magnetspulen kein hinreichend homogenes Magnetfeld im Bereich des Querankers erzeugt werden kann, was zu größeren Linearitätsabweichungen und zu einer schlechten Reproduzierbarkeit des Meßsignals in Abhängigkeit von der sprechenden Auslenkung des Querankers führt. Des weiteren sind auch die baulichen Aufwendungen recht groß, da ein separates Tastorgan mit entsprechenden Führungselementen und eine mechanische Kopplung dieses Tastorgans mit dem Queranker vorgesehen sein muß. Sowohl das Tastorgan als auch die Kopplungseinrichtung beeinflussen ihrerseits aber wiederum auch das Meßsignal, so daß die Meßunsicherheit bei gleichzeitiger Verschlechterung der Reproduzierbarkeit zusätzlich erhöht wird.

Eine lineare Kennlinie einer Vorrichtung zum Messen der Papierdicke ist notwendig, um beispielsweise mit Hilfe des Sensorsignals in einer Papierverarbeitungsanlage Papiereinzugswalzen, Transportspalte und dgl. auf den für einen reibungsfreien Ablauf der Papierverarbeitung notwendigen, von der jeweiligen Papierstärke abhängigen Abstand maßgenau einstellen zu können. Insbesondere in tinuierlichen Verfahren, die z.B. mit Vereinzelungsvorrichtungen für einzelne Papierbögen versehen sind und terschiedliche Papierqualitäten und -stärken verarbeiten, ist eine automatische präzise Einstellung der Transportspalte zwischen den Transportwalzen der Transporteinrichtungen unerläßlich, um einen störungsfreien Betrieb der Papierverarbeitungsanlage zu gewährleisten. Für eine solche präzise Einstellung ist es allerdings notwendig die Papierstärke zu messen und ein Meßsignal zu erzeugen, das es erlaubt direkt z.B. für die Transportspalteinstellung verwendet werden zu können. Damit muß ein Meßsignal bereitgestellt werden, das einen linearen Zusammenhang zur Papierstärke aufweist und reproduzierbar erzeugt werden kann.

Demgemäß liegt der Erfindung die Aufgabe zugrunde, eine Vorrichtung der gattungsgemäßen Art zu schaffen, die bei kleiner, kompakter Bauweise eine möglichst lineare, reproduzierbare Kennlinie aufweist, d.h. das Meßsignal in direktem linearen Zusammenhang mit der zu messenden Papierdicke steht.

Die Aufgabe wird erfindungsgemäß dadurch gelöst, daß der Tastsensor ein über der Auflagefläche angeordnetes Sensorgehäuse und als Tastorgan ein im wesentlichen zylindrisches Target mit einer stirnseitigen zur Auflagefläche weisenden Tastfläche aufweist, daß das Target axial zum Sensorgehäuse in diesem verschiebbar geführt ist, daß das Target in seiner der Tastfläche gegenüberliegenden Stirnseite eine Ausnehmung in Form eines Rotationsparaboloiden aufweist, daß im Sensorgehäuse die Sensorspule in die Ausnehmung des Targets zumindest teilweise hineinragt, daß das Target und die Sensorspule koaxial zueinander angeordnet sind.

Durch die erfindungsgemäße Ausgestaltung des Tastsensors wird Vorteilhaft erreicht, daß bei kleinster Baugröße des Tastsensors dessen Meßsignal reproduzierbar linear zur Auslenkung des Tastorgans ist.

Die Ausgestaltung gemäß Anspruch 2 führt zu einer Erhöhung der Meßgenauigkeit in einem Meßbereich von 0 bis etwa 1,5 mm.

Durch die Ausgestaltung gemäß der Ansprüche 3 bis 6 wird vorteilhaft erreicht, daß die Vorrichtung zur kontinuierlichen Messung der Materialstärke von unterschiedlich dicken Papierbögen innerhalb eines laufenden Papierverarbeitungsverfahrens einsetzbar ist.

Durch die Ausgestaltung gemäß Anspruch 7 wird der lineare Meßbereich vergrößert.

Im folgenden wird anhand der Zeichnung die Erfindung näher erläutert. Es zeigt:

Fig. 1     einen Tastsensor der erfindungsgemäßen Art im Teilschnitt;
Fig. 2     eine Sensorspule im Schnitt;
Fig. 3     ein Target der erfindungsgemäßen Art;
Fig. 4     eine zweite Ausführungsform des Tastsensors im Teilschnitt;
Fig. 5     eine Ansicht V aus Fig. 4;
Fig. 6     die erfindungsgemäße Vorrichtung mit Transportband im Teilschnitt;
Fig. 7     eine Seitenansicht VII aus Fig. 6;
Fig. 8     ein Prinzipschaltbild der Vorrichtung.

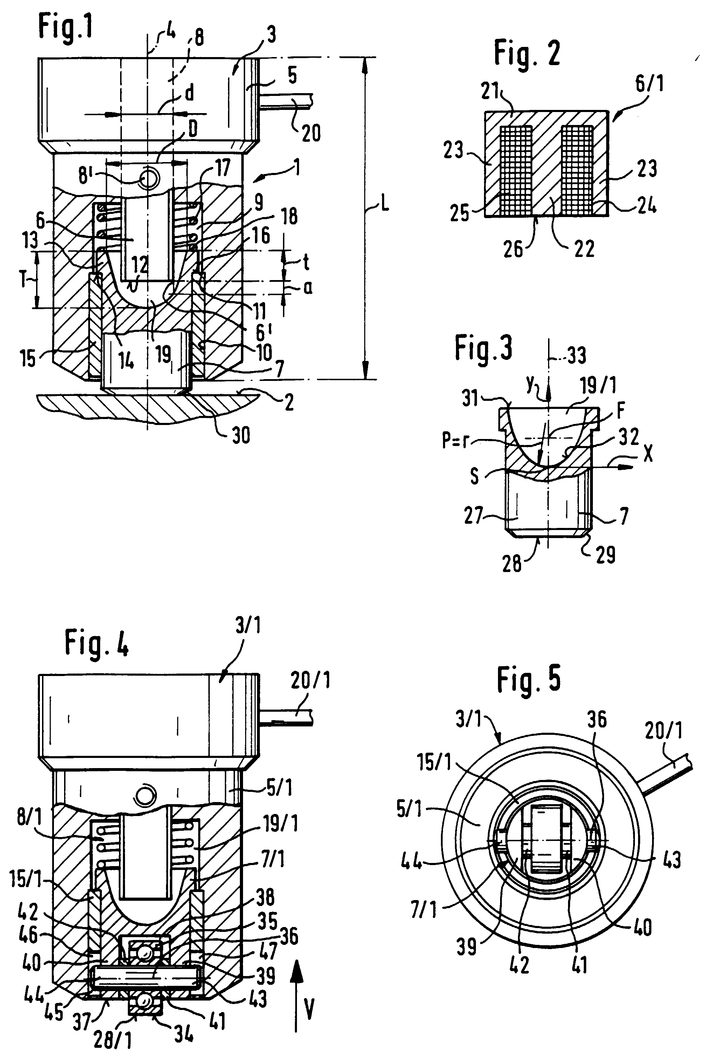

Fig. 1 zeigt eine Meßvorrichtung 1 der erfindungsgemäßen Art, bestehend aus einer Auflagefläche 2 und einem Tastsensor 3. Der Tastsensor 3 ist mit seiner Langsmittelachse 4 senkrecht zur Auflagefläche 2 angeordnet. Sowohl der Tastsensor 3 als auch die Auflagefläche 2 sind durch entsprechende Halterungen (in der Zeichnung nicht dargestellt) relativ zueinander ortsfest gehalten.

Der Tastsensor 3 weist ein im wesentlichen zylindrisches Sensorgehäuse 5 auf, welches zur Aufnahme einer zylindrischen Sensorspule 6 und eines zylindrischen Targets 7 mit einer abgesetzten, koaxial zum Sensorgehäuse 5 verlaufenden Durchgangsbohrung 8 versehen ist. Die Durchgangsbohrung 8 ist in etwa im oberen drittel des Sensorgehäuses 5 im Durchmesser verjüngt ausgeführt und nimmt die Sensorspule 6 passend auf. Die Sensorspule 6 verläuft koaxial zur Längsmittelachse 4 des Tastsensors 3 und ist durch eine Querverschraubung 8' mit dem Sensorgehäuse 5 fest verbunden.

Im mittleren Bereich 9 ihrer Länge ist die Durchgangsbohrung 8 auf etwa einem viertel ihrer Gesamtlänge L etwa auf den doppelten Durchmesser der Sensorspule 6 erweitert. Daran schließt sich ein radial nach außen erweiterter abgesetzter Bereich 10 der Durchgangsbohrung 8 an, so daß sich zwischen dem mittleren Bereich 9 und dem abgesetzten Bereich 10 der Durchgangsbohrung ein umlaufender Absatz 11 ergibt.

Die Sensorspule 6 ragt von oben in diese beiden Bereiche 9, 10 hinein, wobei sie mit ihrer unteren Stirnfläche 12 wenig unterhalb des umlaufenden Absatzes 11 liegt. Unterhalb der Sensorspule 6 ist das Target 7 angeordnet, welches an seinem oberen Ende 13 einen radial nach außen gerichteten umlaufenden Absatz 14 aufweist. Das Target 7 ist mittels einer zylindrischen Lagerbuchse 15 in der Durchgangsbohrung 8 gehalten und stützt sich im Ruhezustand mit seinem Absatz 14 auf der oberen radial nach innen in die Druchgangsbohrung 8 vorstehende Stirnfläche 16 der Lagerbuchse 15 ab. Die Lagerbuchse 15 ist in den radial abgesetzten Bereich 10 der Durchgangsbohrung 8 eingepreßt, wobei die Einpreßtiefe und damit die axiale Lage des Target 7 durch den umlaufenden Absatz 11 der Durchgangsbohrung 8, an welchem die Lagerbuchse 15 mit ihrer oberen Stirnfläche 16 anliegt, definiert ist. Das Target 7 ist in der Lagerbuchse 15 axial verschiebbar geführt und ragt aus dem Sensorgehäuse 5 nach unten etwa 2 bis 6 mm heraus. Zur Sicherung der Ruhelage des Targets ist eine Schraubendruckfeder 17 vorgesehen, durch welche das Target 7 mit seinem Absatz 14 auf der Stirnfläche 16 der Lagerbuchse 15 gehalten wird.

An seiner oberen zur Sensorspule 6 hin gerichteten Stirnseite 18 ist das Target 7 mit einer stirnseitigen Ausnehmung 19 versehen, welche die Form eines oben offenen tationsparaboloiden aufweist. In diese Ausnehmung 19 des Targets 7 ragt die Sensorspule 6 in Ruhestellung gemäß Fig. 1 mit ihrem unteren Ende bis etwa zur Hälfte der Gesamttiefe **T** der Ausnehmung 19 hinein. In dieser Ruhestellung beträgt die Eintauchtiefe **t** der Sensorspule 6 in die Ausnehmung 19 etwa 3 bis 5 mm. Das Target 7 ist aus seiner Ruhestellung etwa 2 bis 2,5 mm axial nach oben in Richtung Sensorspule 6 gegen die Federkraft der Schraubendruckfeder 17 verschiebbar.

Zur Spannungsversorgung der Sensorspule 6 und zur Weiterleitung des Meßsignals an eine entsprechende Auswertelektronik ist der Tastsensor mit einer Signalleitung 20 versehen, welche im oberen Bereich des Sensorgehäuses 5 angeordnet ist.

Fig. 2 zeigt eine Sensorspule 6/1, wie sie für den Tastsensor 3 bevorzugt Verwendung findet. Bei der Sensorspule 6/1 handelt es sich um eine zylindrische Schalenkernspule, welche ein topfartiges, einseitig offenes Spulengehäuse 21 und einen zentralen zylindrischen Spulenkern 22 aufweist. Der Spulenkern 22 und die Ringwand 23 des Spulengehäuses 21 bilden zusammen einen Ringkanal 24 , in welchem der Spulenkörper 25 der Sensorspule 6/1 angeordnet ist. Diese spezielle Spulenform hat gegenüber anderen Spulenformen, wie z.B. Zylinder- und T-Kernspulen bezüglich der Ausbildung des magnetischen Streufeldes und ihrer Abschirmungseigenschaften wesentliche Vorteile. So verhindert die äußere Ringwand 23 wirksam die Beeinflussung des von der Schalenkernspule 6/1 erzeugten Magnetfeldes durch evtl. vorhandene elektromagnetische äußere Störfelder. Des weiteren weist das an der Stirnseite 26 der Schalenkernspule (6/1) austretende Magnetfeld einen gerichteten, etwa elliptischen Feldlinienverlauf auf, wodurch Streufeldverluste äußerst gering gehalten sind.

Fig. 3 zeigt das zylindrische Target 7 aus Fig. 1 im Teilschnitt. An seinem unteren Endabschnitt 27 weist das Target 7 eine Tastfläche 28 auf, welche mit einer umlaufenden Übergangsfase 29 versehen ist. Diese Übergangsfase 29 bildet zusammen mit der Auflagefläche 2 einen sich zur Tastfläche 28 hin verjüngender Spalt 30 (Fig. 1), so daß zwischen das Target 7 bzw. die Tastfläche 28 des Targets 7 und die Auflagefläche 2 z. B. einen Papierbogen bringbar ist, ohne das Target 7 bzw. den gesamten Tastsensor 3 von der Auflagefläche 2 abheben zu müssen. An seiner oberen Stirnfläche 31 ist das Target 7 mit einer Ausnehmung 19/1 versehen, welche die Form eines Rotationsparaboloiden aufweist. Diese Form des Rotationsparaboloiden bestimmt sich nach der allgemeinen Gleichung in der Normalform:

$$Z = \frac{X^2}{a^2} + \frac{Y^2}{b^2}$$

Für **a = b** erhält man die Form eines elliptischen Paraboloiden, d.h. die in Fig. 3 dargestellte Schnittlinie 32 der Ausnehmung 19/1 stellt die untere Hälfte einer nach oben offenen Ellipse dar. Diese elliptische Form der Schnittlinie ist durch folgende Ellipsengleichung bestimmt:

$$Y = \frac{1}{2}\,P{\cdot}X^2$$

wobei **P** dem Scheitelradius **r** entspricht. Im konkreten Ausführungsbeispiel beträgt **r = 2,25 mm**. Legt man in den Scheitelpunkt **S** der Ellipse ein x-y-Koordinatensystem (Fig. 3), so ergeben sich für den Brennpunkt **F** der Ellipse vorliegend die Koordinaten **F = (0; 1,125)**. Durch die Rotation der Ellipse um die Längsmittelachse 33 des Targets 7 ergibt sich die Sonderform eines elliptischen Paraboloiden, der durch die obige Gleichung für **Z** definiert ist. Für diese Gleichung verläuft die z-Achse deckungsgleich mit der Längsmittelachse 33 des Targets 7, wobei die x- und y-Achse eine senkrecht zur z-Achse liegende, durch den Scheitelpunkt **S** der Ellipse verlaufende x-y-Ebene bilden.

Durch diese besondere elliptische Form des Rotationsparaboloiden sind die besten linearen Eigenschaften des Sensors bzw. der Meßvorrichtung 1 erreichbar.

Allgemein hat sich gezeigt, daß die Vorrichtung zur Papierdickenmessung bei folgenden Maßverhältnissen eine äußerst gute Linearität aufweist. Das Verhältnis des oberen Durchmessers **D** der Ausnehmung 19 zum Sensorspulendurchmessers **d** beträgt vorzugsweise etwa 13÷8, während das Verhältnis der Eintauchtiefe **t** der Sensorspule 6 in die Ausnehmung 19 zu ihrem Durchmesser **d** etwa 5÷4 beträgt. Das Verhältnis des vertikalen Abstand **a** der unteren Außenkante 6' der Sensorspule 6 in Ruhestellung von der Innenwand der Ausnehmung 19 zum Durchmesser **d** der Sensorspule 6 beträgt etwa 1÷4.

Die Fig. 4 zeigt eine weitere Ausführungsform 3/1 des Tastsensors 3. Diese Ausführungsform 3/1 ist besonders zur kontinuierlichen Dickenmessung von in einer Papierverarbeitungsanlage durchlaufenden Papierbahnen oder durchlaufenden einzelnen Papierbögen geeignet.

Der Tastsensor 3/1 weist eine Tastfläche 28/1 auf, die von der Mantelfläche 34 einer im wesentlichen zylindrischen Tastrolle 35 gebildet ist. Die Tastrolle 35 ist mittels einer Lagerachse 36 im Target 7/1 drehbar gelagert und überragt die untere Stirnfläche 37 des Targets 7/1 um ca. 3 bis 5 mm. Zur Aufnahme der Tastrolle 35 ist das Target 7/1 mit einer Aufnahmenut 38 versehen, wobei zur seitlichen Führung der Tastrolle 35 zwischen der Tastrolle 35 und den beiden einander gegenüberliegenden Seitenwänden 39, 40 der Aufnahmenut 38 jeweils eine Ausgleichsscheibe 41 bzw. 42 vorgesehen ist. Die beiden Enden 43, 44 der Lagerachse 36 durchragen jeweils eine Seitenwand 39 bzw. 40 des Targets 7/1. Zur Aufnahme des Targets 7/1 ist eine zylindrische Lagerbuchse 15/1 vorgesehen, welche in die Aufnahmebohrung 8/1 des Sensorgehäuses 5/1 passend eingesetzt ist. Die Lagerbuchse 15/1 ist in ihrem unteren Endbereich 45 mit sich radial gegenüberliegenden, nach unten offenen Führungsschlitzen 46, 47 versehen, in welche das jeweilige zugeordnete Ende 43 bzw. 44 der Lagerachse 36 hineinragt. Durch die beiden Führungsschlitze 46, 47 ist das Target 7/1 verdrehsicher und axial verschiebbar gegenüber der Lagerbuchse 15/1 bzw. des Sensorgehäuses 5/1 geführt. Die Führungsschlitze 46, 47 sind derart ausgebildet, daß das Target 7/1 in vertikaler Richtung nach oben frei beweglich anhebbar ist. Das Target 7/1 weist ebenfalls eine rotationsparaboloidische Ausnehmung 19/1 auf, in welche die Sensorspule 6, wie schon bezüglich Fig. 1 beschrieben, hineinragt. Die weitere Ausgestaltung des Sensorgehäuses 5/1 entspricht der Ausgestaltung des Sensorgehäuses 5 aus Fig. 1. Wie in Fig. 4 bzw. Fig. 5 dargestellt, ist die Lagerachse 36 in zusammengebautem Zustand in der Durchgangsbohrung 8/1 des Sensorgehäuses 5/1 unverlierbar im Target 7/1 angeordnet. Auch der Tastsensor 3/1 ist mit einer Versorgungs- bzw. Signalleitung 20/1 versehen.

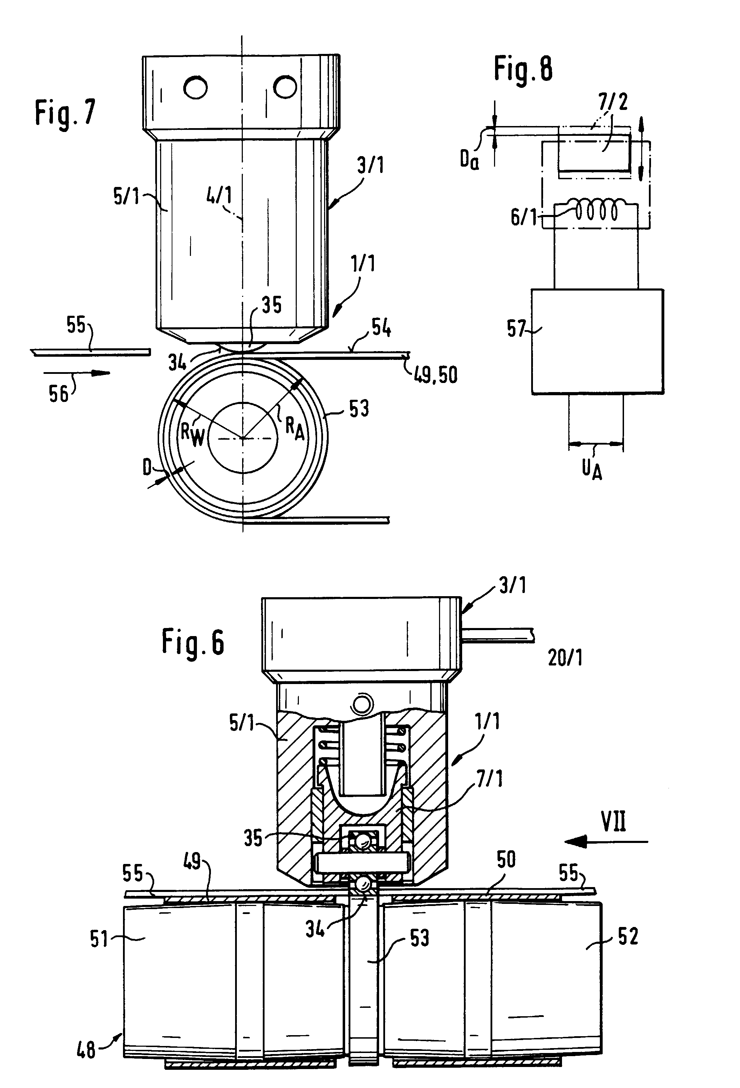

Die Fig. 6 und 7 zeigen ein Anwendungsbeispiel der erfindungsgemäßen Meßvorrichtung nach dem Ausführungsbeispiel der Figuren 4 und 5.

In Fig. 6 ist eine Doppelantriebswalze 48 einer Papierverarbeitungsanlage dargestellt, welche zum Antrieb zweier Transportbänder 49, 50 zwei im Abstand zueinander an geordnete Antriebsbereiche 51, 52 aufweist. Die beiden Transportbänder 49, 50 umschlingen den jeweils zugeordneten Antriebsbereich 51, 52 und verlaufen parallel im Abstand zueinander. Zwischen den Transportbändern 49, 50 bzw. den Antriebsbereichen 51, 52 ist die Doppelantriebswalze 48 mit einem Auflagezylinder 53 versehen, dessen Radius $R_A$ dem Radius $R_W$ (Fig. 7) der Antriebsbereiche 51, 52 der Doppelantriebswalze zuzüglich der Dicke **D** eines Transportbandes 49 bzw. 50 entspricht. Oberhalb der Transportwalze ist der Tastsensor 3/1 angeordnet, wobei er mit seiner Längsmittelachse 4/1 vertikal und radial zur Doppelantriebswalze 48 verläuft. Der Tastsensor 3/1 berührt mit der Mantelfläche 34 seiner Tastrolle 35 den Auflagezylinder 53 der Antriebswalze 48 in der von den Transportbändern 49, 50 definierten horizontalen Einlaufebene 54. Dadurch ist gewährleistet, daß ein einlaufender Papierbogen 55 (Fig. 7), welcher in Transportrichtung (Pfeil 56) den Transportbändern 49, 50 zugeführt wird, gleichzeitig von den Transportbändern 49, 50 und von der Meßvorrichtung 1/1 erfaßt wird, wodurch ein Ausknicken oder eine sonstige Beschädigung des durchlaufenden Papierbogens 55 wirksam verhindert wird. Es ist auch möglich, den Tastsensor 3/1 für eine einfache Antriebswalze mit nur einem Antriebsbereich einzusetzen. In diesem Fall ist der Auflagezylinder 53 an einer der beiden Stirnseiten der Antriebswalze anzuordnen.

Fig. 8 zeigt das Prinzipschaltbild der Meßvorrichtung 1 bzw. 1/1 in Verbindung mit der Auswerteelektronik 57. Die Auswerteelektronik 57 besteht aus einer Spannungsversorgung, einem Demodulator, einer Anpassungsschaltung und einer nachgeschalteten Verstärkerschaltung. Die durch einen Papierbogen erfolgte Auslenkung $D_a$ des Targets 7/2 bewirkt in der Sensorspule 6/1 eine Änderung der Induktivität und damit eine Änderung ihrer Impedanz. Diese Impedanzänderung wird von der Auswerteelektronik 57 in Form einer Widerstandsmessung in eine Ausgangsspannung $U_A$ umgesetzt. Diese Ausgangsspannung $U_A$ ist linear proportional zur Auslenkung $D_a$ des Targets 7/2. Die Ausgangsspannung $U_A$ ist somit als Meßsignal direkt zur Einstellung des papierdickenabhängigen Transportspaltes zweier Transportwalzen einer Papierverarbeitungsanlage einsetzbar.

**Patentansprüche**

1. Vorrichtung zum elektronischen Messen der Dicke von dünnen Bahnen oder Bögen, insbesondere Folien oder Papierbögen, bestehend aus einer ortsfesten Auflagefläche und einem im wesentlichen senkrecht zu dieser Auflagefläche (2, 49) ortsfest angeordneten Tastsensor, der ein relativ zur Auflagefläche bewegliches ferromagnetisches Tastorgan aufweist, das in Abhängigkeit von seiner Stellung relativ zur Auflagefläche das Signal eines als Sensorspule ausgebildeten induktiven Meßwertgebers beeinflußt,
   **dadurch gekennzeichnet,**

   daß der Tastsensor (3, 3/1) ein über der Auflagefläche (2, 49) angeordnetes Sensorgehäuse (5, 5/1) und als Tastorgan ein im wesentlichen zylindrisches Target (7, 7/1, 7/2) mit einer stirnseitigen zur Auflagefläche weisenden Tastfläche (25, 25/1) aufweist,
   daß das Target (7, 7/1, 7/2) axial zum Sensorgehäuse (5, 5/1) in diesem verschiebbar geführt ist,
   daß das Target (7, 7/1, 7/2) in seiner der Tastfläche (25, 25/1) abgewandte Stirnseite eine Ausnehmung (19, 19/1) in Form eines Rotationsparaboloiden aufweist,
   daß im Sensorgehäuse (5, 5/1) die Sensorspule (6, 6/1) in die Ausnehmung (19, 19/1) des Targets (7, 7/1, 7/2) zumindest teilweise hineinragt, und daß das Target (7, 7/1, 7/2) und die Sensorspule (6, 6/1) koaxial zueinander angeordnet sind.

2. Vorrichtung nach Anspruch 1, dadurch gekennzeichnet, daß die Ausnehmung (19, 19/1) des Targets (7, 7/1, 7/2) die Form eines elliptischen Paraboloiden aufweist.

3. Vorrichtung nach Anspruch 1 oder 2, dadurch gekennzeichnet, daß das Target (7, 7/1, 7/2) stirnseitig zur Auflagefläche (2) hin eine drehbar gelagerte Tastrolle (35) aufweist, deren im wesentlichen zylindrische Mantelfläche (34) die Tastfläche des Targets (7, 7/1, 7/2) bildet.

4. Vorrichtung nach Anspruch 1, dadurch gekennzeichnet, daß die Auflagefläche von einem drehbaren ortsfesten Auflagezylinder (53) gebildet ist, auf dessen Mantelfläche die Tastrolle (35) des Targets (7, 7/1, 7/2) abrollt.

5. Vorrichtung nach Anspruch 3 oder 4, dadurch gekennzeichnet, daß das Sensorgehäuse (3,1) mit seiner Längsmittelachse (4/1) radial zum Auflagezylinder (53) angeordnet ist.

6. Vorrichtung nach Anspruch 4 oder 5, dadurch gekennzeichnet, daß der Auflagezylinder (53) Bestandteil einer Antriebswalze (48) eines oder mehrer Transportbänder (49, 50) ist.

7. Vorrichtung nach einem der Ansprüche 1 bis 6, dadurch gekennzeichnet, daß die Sensorspule (6, 6/1) eine Schalenkernspule mit gerichtetem Streufeld ist.

**Claims**

1. A device for electronically measuring the thickness of thin webs or sheets, particularly foils or sheets of paper, consisting of a fixed supporting surface and, disposed rigidly and substantially at right-angles to this support surface (2, 49), a scanning sensor comprising a ferromagnetic sensing member adapted for movement in relation to the supporting surface and which, as a function of its position in relation to the supporting surface, influences the signal from an inductive measured value transmitter which is constructed as a sensor coil, characterised in that the scanning sensor (3, 3/1) comprises a sensor housing (5, 5/1) disposed above the supporting surface (2, 49) and, as a sensing element, a substantially cylindrical target (7, 7/1, 7/2) having a sensing surface (25, 25/1) directed at the supporting surface and in that the target (7, 7/1, 7/2) is guided for displacement in and axially in relation to the sensor housing (5, 5/1) and in that the target (7, 7/1, 7/2) comprises in its end face remote from the sensing surface (25, 25/1) a recess (19, 19/1) in the form of a parabola of rotation and in that in the sensor housing (5, 5/1), the sensor coil (6, 6/1) penetrates at least partially into the recess (19, 19/1) of the target (7, 7/1, 7/2) and in that the target (7, 7/1, 7/2) and the sensor coil (6, 6/1) are disposed coaxially of each other.

2. A device according to claim 1, characterised in that the recess (19, 19/1) in the target (7, 7/1, 7/2) is in the form of an elliptical parabola.

3. A device according to claim 1 or 2, characterised in that the target (7, 7/1, 7/2) has at its end and towards the supporting surface (2) a rotatably mounted scanning roller (35) of which the substantially cylindrical outer surface (34) constitutes the sensing surface of the tartget (7, 7/1, 7/2).

4. A device according to claim 1, characterised in that the supporting surface is constituted by a rotatable rigidly disposed supporting cylinder (53) on the outer surface of which rolls the sensing roller (35) of the target (7, 7/1, 7/2).

5. A device according to claim 3 or 4, characterised in that the sensor housing (3/1) has its longitudinal central axis (4/1) disposed radially in relation to the supporting cylinder (53).

6. A device according to claim 4 or 5, characterised in that the supporting cylinder (53) is a constituent part of a drive roller (48) of one or more conveyor belts (49, 50).

7. A device according to one of claims 1 to 6, characterised in that the sensor coil (6, 6/1) is a shell core coil with a directional magnetic field.

**Revendications**

1. Appareil de mesure électronique de l'épaisseur de bandes ou de feuilles minces, en particulier de feuilles de papier, constitué d'une surface fixe d'appui et d'un capteur palpeur monté fixe sensiblement perpendiculairement à cette surface d'appui (2, 49) et présentant un organe palpeur ferromagnétique mobile par rapport à la surface d'appui et influant en fonction de sa position par rapport à la surface d'appui sur le signal d'un transducteur de mesure inductif constitué d'une bobine capteur,

caractérisé par le fait

que le capteur palpeur (3, 3/1) présente un corps (5, 5/1) placé au-dessus de la surface d'appui (2, 49) et, comme organe palpeur, une cible sensiblement cylindrique (7, 7/1, 7/2) ayant une surface palpeuse frontale (25, 25/1) dirigée vers la surface d'appui,

que la cible (7, 7/1, 7/2) est montée dans le corps (5, 5/1) mobile axialement par rapport à celui-ci,

que la cible (7, 7/1, 7/2) présente dans sa face frontale opposée à la surface palpeuse (25, 25/1) un évidement (19, 19/1) en forme de paraboloïde de révolution,

que dans le corps (5, 5/1), la bobine capteur (6, 6/1) entre au moins en partie dans l'évidement (19, 19/1) de la cible (7, 7/1, 7/2), et

que la cible (7, 7/1, 7/2) et la bobine capteur (6, 6/1) sont placées coaxialement.

2. Appareil selon la revendication 1, caractérisé par le fait que l'évidement (19, 19/1) de la cible (7, 7/1, 7/2) a la forme d'un paraboloïde elliptique.

3. Appareil selon l'une des revendications 1 et 2, caractérisé par le fait que la cible (7, 7/1, 7/2) présente frontalement vers la surface d'appui (2) un rouleau palpeur monté tournant (35) dont la surface latérale sensiblement cylindrique (34) forme la surface palpeuse de la cible (7, 7/1, 7/2).

4. Appareil selon la revendication 1, caractérisé par le fait que la surface d'appui est formée par un cylindre d'appui fixe tournant (53) sur la surface latérale duquel roule le rouleau palpeur (35) de la cible (7, 7/1, 7/2).

5. Appareil selon l'une des revendications 3 et 4, caractérisé par le fait que l'axe longitudinal (4/1) du corps (3,1) du capteur est placé radialement par rapport au cylindre d'appui (53).

6. Appareil selon l'une des revendications 4 et 5, caractérisé par le fait que le cylindre d'appui (53) fait partie d'un rouleau moteur (48) d'une ou de plusieurs bandes transporteuses (49, 50).

7. Appareil selon l'une des revendications 1 à 6, caractérisé par le fait que la bobine capteur (6, 6/1) est une bobine à noyau en pot à champ de fuite dirigé.

## Fig.1

## Fig. 2

## Fig.3

## Fig. 4

## Fig. 5

Fig. 7

Fig. 8

Fig. 6